# EUROPÄISCHE PATENTSCHRIFT

(11) **EP 3 224 507 B1**
(45) Veröffentlichungstag und Bekanntmachung des Hinweises auf die Patenterteilung: **09.09.2020**
(21) Anmeldenummer: 15802071.9
(22) Anmeldetag: 27.11.2015
(51) Int. Cl.: B29C 45/00, F16J 15/32, F16J 15/3212, F16J 15/56, F16L 11/12, F16L 33/30, F16J 15/3236, F16J 15/328, F16J 15/3284

(54) **DICHTELEMENT UND VERFAHREN ZUM HERSTELLEN EINES DICHTELEMENTS**
SEALING ELEMENT AND METHOD FOR PRODUCING A SEALING ELEMENT
ÉLÉMENT D'ÉTANCHÉITÉ ET PROCÉDÉ DE FABRICATION D'UN ÉLÉMENT D'ÉTANCHÉITÉ

(30) Priorität: 28.11.2014 DE 102014224378
(43) Veröffentlichungstag der Anmeldung: 04.10.2017
(73) Patentinhaber: ElringKlinger AG, 72581 Dettingen (DE); Elringklinger Kunststofftechnik GmbH, 74321 Bietigheim-Bissingen (DE)
(72) Erfinder: HOCKER, Klaus, 74379 Ingersheim (DE); SCHUHMACHER, Walter, 74321 Bietigheim-Bissingen (DE); KLEIN, Patrick, 70771 Leinfelden-Echterdingen (DE); KOPP, Fabian, 71732 Tamm (DE); STERN, Claudia, 73497 Tannhausen (DE)
(74) Vertreter: Hoeger, Stellrecht & Partner Patentanwälte mbB
(86) Internationale Anmeldenummer: PCT/EP2015/077950
(87) Internationale Veröffentlichungsnummer: WO 2016/083591

(56) Entgegenhaltungen:
- EP-A1- 2 559 922
- WO-A2-2007/033072
- DE-A1-102007 063 216
- DE-U1- 20 109 891
- GB-A- 1 494 214
- US-A- 2 717 025
- US-B1- 6 557 857

## Beschreibung

Die vorliegende Erfindung betrifft ein Dichtelement, insbesondere zur Verwendung als Stangendichtung, Kolbendichtung und/oder Wellendichtung.

Ein solches Dichtelement ist beispielsweise aus der DE 10 2012 112 594 A1, der EP 2 559 922 A1, der WO 2007/033072 A2, der DE 10 2007 063 216 A1 sowie der US 6,557,857 B1 bekannt.

Der vorliegenden Erfindung liegt die Aufgabe zugrunde, ein Dichtelement bereitzustellen, welches eine zuverlässige Abdichtung gewährleistet und einfach und kostengünstig herstellbar ist.

Diese Aufgabe wird beispielsweise durch ein Dichtelement gemäß Anspruch 1 gelöst.

Der Grundkörper ist ein spritzgießbares, thermoplastisches Kunststoffmaterial oder ist aus einem spritzgießbaren, thermoplastischen Kunststoffmaterial gebildet.

Das thermoplastische Kunststoffmaterial ist ein Fluor-Thermoplastmaterial, beispielsweise ein vollfluoriertes thermoplastisches Kunststoffmaterial.

Ferner betrifft die vorliegende Erfindung ein Verfahren zur Herstellung eines Dichtelements.

Der Erfindung liegt diesbezüglich die Aufgabe zugrunde, ein Verfahren bereitzustellen, mittels welchem ein zuverlässig abdichtendes Dichtelement einfach und kostengünstig herstellbar ist.

Diese Aufgabe wird erfindungsgemäß durch ein Verfahren gemäß dem unabhängigen Verfahrensanspruch gelöst.

Vorteilhafte Merkmale sind in den abhängigen Ansprüchen aufgeführt.

Der Grundkörper wird aus spritzgießbarem, teilfluoriertem oder vollfluoriertem thermoplastischen Kunststoffmaterial hergestellt.

Das thermoplastische Kunststoffmaterial ist vorzugsweise wie folgt herstellbar oder hergestellt:
Günstig kann es sein, wenn das thermoplastische Kunststoffmaterial ein Compoundmaterial ist, welches insbesondere mittels einer Compoundieranlage herstellbar oder hergestellt ist.

Die Compoundieranlage umfasst vorzugsweise einen Extruder, insbesondere einen Schneckenextruder, beispielsweise einen Doppelschneckenextruder.

Zur Gewährleistung der gewünschten Werkstoffparameter müssen die insbesondere eine Schneckendrehzahl, eine Schneckengeometrie, eine Mischungsverhältnis der Ausgangsstoffe und ein Temperaturverlauf genau gesteuert und/oder geregelt werden.

Zur Herstellung des thermoplastischen Kunststoffmaterials werden vorzugsweise einzelne oder mehrere der folgenden Verarbeitungsbedingungen, insbesondere sämtliche der folgenden Verarbeitungsbedingungen, eingehalten:

| **Parameter** | **Einheit** | **Wert** |
|---|---|---|
| Rohstoff 1 - Fluorpolymer | % | 94 |
| Rohstoff 2 - Kohlefaser | % | 4 |
| Rohstoff 3 - Graphit | % | 2 |
| Schneckendurchmesser | mm | 25 |
| Verhältnis von Länge zu Durchmesser | - | 42 |
| Temperaturen in den aufeinanderfolgenden Zonen der Plastifiziereinheit: | | |
| C1 | °C | 80 ± 20 |
| C2 | °C | 340 ± 20 |
| C3 | °C | 360 ± 20 |
| C4 | °C | 365 ± 20 |
| C5 | °C | 350 ± 20 |
| C6 | °C | 340 ± 20 |
| Schneckendrehzahl | U/min | 180 ± 40 |
| Massedruck | bar | 12 ± 6 |
| Massetemperatur (Temperatur am Austritt des Extruders) | °C | 360 ± 20 |
| Massedurchsatz | kg/h | 15 ± 5 |
| Abzugsgeschwindigkeit | m/min | 15 ± 5 |

Das Material "Kohlefaser" ist insbesondere Kohlenstofffaser.

Günstig kann es sein, wenn der Fluorpolymeranteil des thermoplastischen Kunststoffmaterials hinsichtlich seiner Masse und/oder seines Volumens mindestens ungefähr 90%, beispielsweise ungefähr 94%, beträgt.

Ferner kann vorgesehen sein, dass der Fluorpolymeranteil des thermoplastischen Kunststoffmaterials hinsichtlich seiner Masse und/oder seines Volumens höchstens ungefähr 99% vorzugsweise höchstens ungefähr 96%, beispielsweise ungefähr 94%, beträgt.

Günstig kann es sein, wenn ein Kohlefaseranteil des thermoplastischen Kunststoffmaterials hinsichtlich seiner Masse und/oder seines Volumens mindestens ungefähr 0,5%, vorzugsweise mindestens ungefähr 2%, beispielsweise ungefähr 4%, beträgt.

Ferner kann vorgesehen sein, dass ein Kohlefaseranteil des thermoplastischen Kunststoffmaterials hinsichtlich seiner Masse und/oder seines Volumens höchstens ungefähr 10%, vorzugsweise höchstens ungefähr 6%, beispielsweise ungefähr 4%, beträgt.

Günstig kann es sein, wenn ein Graphitanteil des thermoplastischen Kunststoffmaterials hinsichtlich seiner Masse und/oder seines Volumens mindestens ungefähr 0,5%, vorzugsweise mindestens ungefähr 1,5%, beispielsweise ungefähr 2%, beträgt.

Ferner kann vorgesehen sein, dass ein Graphitanteil des thermoplastischen Kunststoffmaterials hinsichtlich seiner Masse und/oder seines Volumens höchstens ungefähr 6%, vorzugsweise höchstens ungefähr 4%, beispielsweise ungefähr 2%, beträgt.

Das auf die beschrieben Weise erhaltene thermoplastische Kunststoffmaterial wird vorzugsweise zur Herstellung eines oder mehrerer Dichtelemente verwendet.

Das thermoplastische Kunststoffmaterial wird hierzu vorzugsweise unter Einhaltung einzelner oder mehrerer der folgenden Verarbeitungsbedingungen, insbesondere sämtlicher der folgenden Verarbeitungsbedingungen, weiterverarbeitet, insbesondere in einem Spritzgussverfahren in eine gewünschte Form gebracht:

| **Parameter** | **Einheit** | **Wert** |
|---|---|---|
| Werkstoffbezeichnung | - | VM3050 |
| Schneckendurchmesser | mm | 25 |
| Temperaturen in den aufeinanderfolgenden Zonen der Plastifiziereinheit: | | |
| C1 | °C | 350 ± 20 |
| C2 | °C | 365 ± 20 |
| C3 | °C | 370 ± 20 |
| C4 | °C | 375 ± 20 |
| C5 | °C | 380 ± 20 |
| Werkzeugtemperatur | °C | 245 ± 20 |
| Plastifiziervolumen | cm³ | 15,6 |
| Einspritzgeschwindigkeit | cm³/s | 30 |
| Einspritzdruck | bar | 1200 ± 100 |
| Nachdruck | bar | 160 |
| Nachdruckzeit | s | 6 |
| Restkühlzeit | s | 15 |

Die herausragenden Eigenschaften dieses vorliegend als VM3050 bezeichneten thermoplastischen Kunststoffmaterials bei dessen Verwendung zur Herstellung von Dichtelementen sind im Vergleich mit anderen Werkstoffen in nachfolgender Tabelle wiedergegeben:

| **Eigenschaften** | **Probekörper** | **PTFE-Compound** | **VM3050** | **VM3044** | **VM3006** |
|---|---|---|---|---|---|
| Verarbeitung | - | Pressen, Sintern | Thermoplastisch (z.B. spritzgießen) | Thermoplastisch (z.B. spritzgießen) | Thermoplastisch (z.B. spritzgießen) |
| Füllstoffgehalt | - | Kohlefaser: 10% Graphit: 5% | Kohlefaser: 4% Graphit: 2% | PI: 20% | PEEK: 30% Kohlefaser: 10% Graphit: 10% |
| Farbe | - | schwarz | schwarz | gelb | schwarz |
| Verschleiß (Lauffläche) | Dichtung | 0,32 mm | 0,41 mm | 0,69 mm | 0,47 mm |
| Leckage | Dichtung | 4 mm³/min | 0,9 mm³/min | 150 mm³/min | 500 mm³/min |
| Radialkraft (original) | Dichtung ohne Feder | 120 ± 10 N | 220 ± 10 N | 70 ± 10 N | 90 ± 10 N |
| Radialkraft nach Temperaturlagerung | Dichtung ohne Feder | 90 ± 10 N | 130 ± 10 N | 40 ± 10 N | 80 ± 10 N |
| Radialkraft (original) | Dichtung mit Feder | 190 ± 10 N | 250 ± 10 N | 125 ± 10 N | 130 ± 10 N |
| Radialkraft nach Temperaturlagerung | Dichtung mit Feder | 155 ± 10 N | 170 ± 10 N | 100 ± 10 N | 125 ± 10 N |

Die Begriffe "ungefähr" oder "näherungsweise" bezeichnen vorzugsweise eine maximale Abweichung von höchstens 10%, insbesondere höchstens 5%, beispielsweise höchstens 1%, des spezifizierten Wertes.

Weitere bevorzugte Merkmale und/oder Vorteile der Erfindung sind Gegenstand der nachfolgenden Beschreibung und der zeichnerischen Darstellung von Ausführungsbeispielen.

In den Zeichnungen zeigen:
- Fig. 1: einen schematischen Längsschnitt durch einen Grundkörper eines Dichtelements, wobei der Grundkörper nur teilweise seine endgültige äußere Form aufweist;
- Fig. 2: eine der Fig. 1 entsprechende schematische Darstellung des Grundkörpers, wobei der Grundkörper zur Fertigstellung einer Außenkontur bearbeitet wurde;
- Fig. 3: eine der Fig. 1 entsprechende schematische Darstellung eines Dichtelements, welches den fertiggestellten Grundkörper und zwei Federelemente umfasst;
- Fig. 4: einen schematischen Längsschnitt durch eine Dichtlippe eines Dichtelements, bei welchem ein Mittelabschnitt mit einem Führungsabschnitt versehen ist;
- Fig. 5: eine der Fig. 4 entsprechende Darstellung einer Dichtlippe eines Dichtelements, wobei das Dichtelement keinen Führungsabschnitt umfasst;
- Fig. 6: eine der Fig. 4 entsprechende Darstellung einer Dichtlippe zur Illustration von Radien der der Dichtkanten der Dichtlippe sowie von Radien von Vertiefungen in der Dichtlippe;
- Fig. 7: eine der Fig. 4 entsprechende Darstellung einer Dichtlippe zur Illustration einer Dichtlippendicke;
- Fig. 8: eine der Fig. 4 entsprechende Darstellung einer Dichtlippe zur Illustration eines Dichtlippenwinkels; und
- Fig. 9: eine der Fig. 4 entsprechende Darstellung einer Dichtlippe zur Illustration von Hinterschnitttiefen und einer Depottiefe eines Depots der Dichtlippe.

Gleiche oder funktional äquivalente Elemente sind in sämtlichen Figuren mit denselben Bezugszeichen versehen.

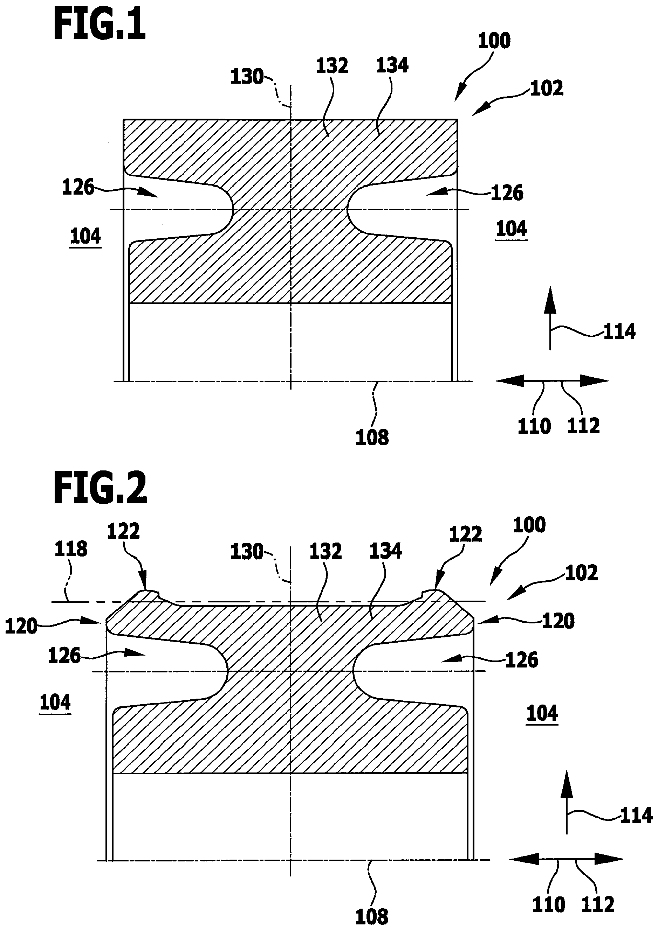

Eine in den Fig. 1 bis 3 dargestellte Ausführungsform eines als Ganzes mit 100 bezeichneten Dichtelements ist beispielsweise Bestandteil einer Hochdruckpumpe 102 und dient der Abdichtung zwischen zwei Medienräumen 104 im Bereich eines beweglichen Bauteils 106.

Das bewegliche Bauteil 106 kann beispielsweise ein Kolben der Hochdruckpumpe 102 sein.

Das bewegliche Bauteil 106 ist insbesondere durch das Dichtelement 100 hindurchgeführt.

Sowohl das bewegliche Bauteil 106 als auch das Dichtelement 100 sind dabei vorzugsweise rotationssymmetrisch um eine Symmetrieachse 108 ausgebildet.

Die Symmetrieachse 108 ist insbesondere parallel zu einer Längsachse 110 des beweglichen Bauteils 106 und des Dichtelements 100 ausgerichtet.

Das Dichtelement 100 und das bewegliche Bauteil 106 weisen im montierten Zustand eine gemeinsame Symmetrieachse 108 auf.

Die Längsachse 110 definiert vorzugsweise eine axiale Richtung 112.

Eine senkrecht zur axialen Richtung 112 ausgerichtete Richtung ist eine radiale Richtung 114.

Mittels des Dichtelements 100 sind vorzugsweise die Medienräume 104 in axialer Richtung 112 voneinander getrennt.

Das Dichtelement 100 grenzt vorzugsweise in radialer Richtung 114 nach innen gerichtet mittels zweier dynamischer Dichtabschnitte 116 an das bewegliche Bauteil 106 an.

In radialer Richtung 114 nach außen gerichtet grenzt das Dichtelement 100 an ein Gehäuse 118 der Hochdruckpumpe 102 an.

Das Dichtelement 100 ist im montierten Zustand desselben relativ zu dem Gehäuse 118 festgelegt.

Zwei den beiden Medienräumen 104 zugeordnete Abdichtbereiche 120 des Dichtelements 100 umfassen somit zusätzlich zu den dynamischen Dichtabschnitten 116 noch zwei an dem Gehäuse 118 anliegende statische Dichtabschnitte 122.

Die dynamischen Dichtabschnitte 116 dienen der dynamischen Abdichtung zwischen dem Dichtelement 100 und dem sich relativ zu dem Dichtelement 100 bewegenden, insbesondere längs der axialen Richtung 112 verschieblichen, Bauteil 106.

Zur Erzielung einer erhöhten Dichtwirkung können ein oder mehrere Federelemente 124 des Dichtelements 100 vorgesehen sein.

Das eine oder die mehreren Federelemente 124 sind insbesondere in einer oder mehreren Federelementaufnahmen 126 anordenbar oder angeordnet.

Mittels des einen oder der mehreren Federelemente 124 sind insbesondere ein oder mehrere dynamische Dichtabschnitte 116 an das bewegliche Bauteil 106 anpressbar.

Alternativ oder ergänzend hierzu kann vorgesehen sein, dass mittels des einen oder der mehreren Federelemente 124 ein oder mehrere statische Dichtabschnitte 122 an ein Gehäuse 118 der Hochdruckpumpe 102 anpressbar sind.

Ein Federelement 124 ist insbesondere ringförmig, beispielsweise kreisringförmig, ausgebildet und weist beispielsweise einen V-förmigen oder U-förmigen Querschnitt auf.

Jeder dynamische Dichtabschnitt 116 umfasst vorzugsweise eine Dichtlippe 127 mit jeweils einer, zwei oder mehr als zwei Dichtkanten 128.

Jede Dichtlippe 127 und/oder jede Dichtkante 128 ist vorzugsweise im Wesentlichen ringförmig und im Wesentlichen rotationssymmetrisch um die Symmetrieachse 108 ausgebildet.

Die Dichtkanten 128 einer jeden Dichtlippe 127 sind dabei vorzugsweise in unterschiedlichen Abständen von einer senkrecht zur Längsachse 110 des Dichtelements 100 verlaufenden Quermittelebene 130 des Dichtelements 100 angeordnet.

Das Dichtelement 100 umfasst insbesondere einen Grundkörper 132, welcher vorzugsweise einstückig aus einem thermoplastischen Kunststoffmaterial gebildet ist.

Der Grundkörper 132 umfasst insbesondere einen oder mehrere dynamische Dichtabschnitte 116, einen oder mehrere statische Dichtabschnitte 122 und eine oder mehrere Federelementaufnahmen 126.

Der Grundkörper 132 kann beispielsweise wie folgt hergestellt werden:
Beispielsweise kann ein Rohling 134 des Grundkörpers 132 in einem Spritzgussverfahren hergestellt werden.

Der Rohling 134 des Grundkörpers 132 weist dabei lediglich abschnittsweise seine endgültige äußere Form auf.

Insbesondere sind lediglich die Federelementaufnahmen 126 bei der Herstellung des Rohlings 134 fertiggestellt.

Die Dichtabschnitte 116, 122 hingegen müssen zur Fertigstellung des Grundkörpers 132 nachbearbeitet werden, insbesondere durch spanende Bearbeitung, beispielsweise CNC-Bearbeitung.

Wie insbesondere aus dem Vergleich der Fig. 1 bis 3 hervorgeht, kann dabei beispielsweise zunächst eine Außenkontur bearbeitet werden, um die radial äußeren statischen Dichtabschnitte 122 fertigzustellen. Anschließend kann dann eine radial innere Bearbeitung zur Fertigstellung der dynamischen Dichtabschnitte 116 erfolgen.

Alternativ hierzu kann vorgesehen sein, dass der Rohling 134 beispielsweise in einem Spritzgussverfahren derart hergestellt wird, dass sowohl die statischen Dichtabschnitte 122 als auch die Federelementaufnahmen 126 nach der Durchführung des Spritzgussprozesses bereits die endgültige äußere Form aufweisen.

Lediglich der radial innere Bereich muss dann noch mechanisch nachbearbeitet werden, um die dynamischen Dichtabschnitte 116 fertigzustellen.

Insbesondere durch eine Kombination der Herstellung des Rohlings 134 in einem Hochdruckprozess und/oder einem Hochtemperaturprozess, beispielsweise einem Spritzgussprozess, einerseits und der nur teilweisen nachträglichen Bearbeitung zur Fertigstellung des Grundkörpers 132 andererseits kann der Grundkörper 132 und somit das gesamte Dichtelement 100 besonders effizient und kostengünstig hergestellt werden.

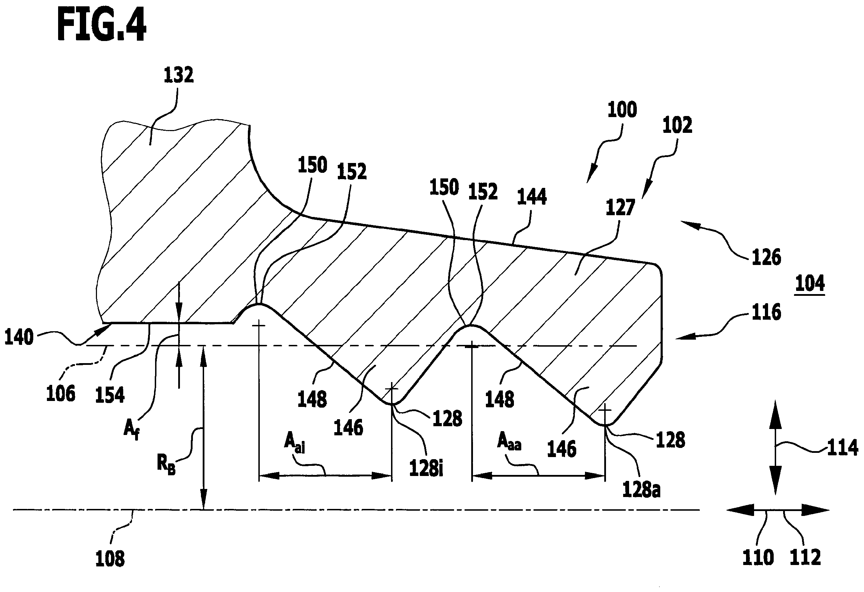

In Fig. 4 ist eine vergrößerte Schnittdarstellung einer Dichtlippe 127 eines dynamischen Dichtabschnitts 116 einer alternativen Ausführungsform eines Dichtelements 100 dargestellt.

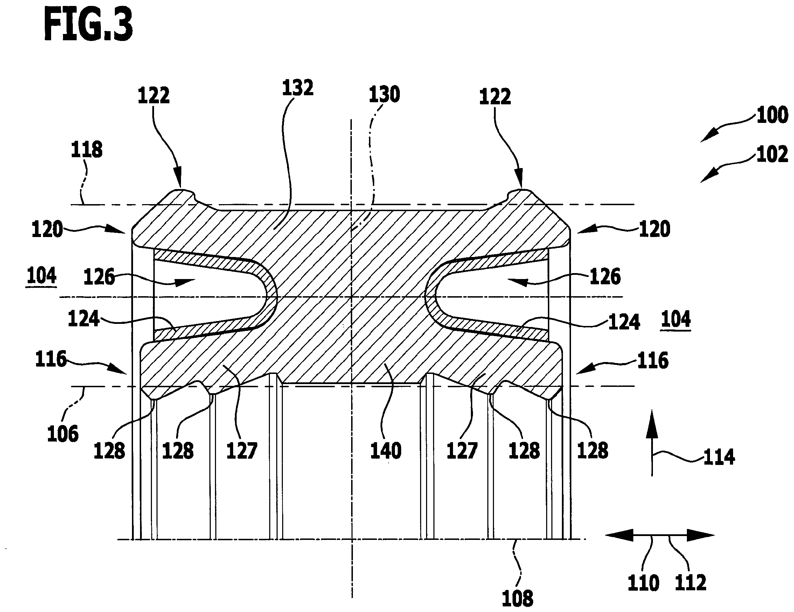

Die Dichtlippe 127 dieses Dichtelements 100 unterscheidet sich von der Dichtlippe 127 der in Fig. 3 dargestellten Ausführungsform des Dichtelements 100 im Wesentlichen durch seine Geometrie.

Zur näheren Erläuterung der Geometrie der Dichtlippe 127 werden zunächst die einzelnen Bestandteile und Bereich der Dichtlippe 127 näher erläutert:
Die Dichtlippe 127 ist durch einen von einem Mittelabschnitt 140 des Grundkörpers 132 leicht schräg zur axialen Richtung 112 verlaufender und geringfügig in radialer Richtung 114 nach innen ragender Abschnitt des Grundkörpers 132. Die Dichtlippe 127 umfasst dabei eine im montierten Zustand des Dichtelements 100 dem beweglichen Bauteil 106 zugewandte Unterseite 142 sowie eine im montierten Zustand des Dichtelements 100 dem beweglichen Bauteil 106 abgewandte Oberseite 144.

Die Oberseite 144 ist im Querschnitt im Wesentlichen eben ausgebildet. Bei dreidimensionaler Betrachtung des Dichtelements 100 weist die Oberseite 144 insbesondere eine Kegelstumpfmantelform auf.

An der Unterseite 142 der Dichtlippe 127 sind ein oder mehrere, beispielsweise zwei, Vorsprünge 146 vorgesehen.

Diese Vorsprünge 146 bilden an ihren in radialer Richtung 114 nach innen ragenden Enden die Dichtkanten 128 der Dichtlippe 127.

In axialer Richtung 112 nach innen, das heißt in Richtung des Mittelabschnitts 140 des Grundkörpers 132 gerichtet, schließt sich an die Dichtkanten 128 jeweils eine Flanke 148 an.

An einer der jeweiligen Dichtkante 128 abgewandten Seite einer jeden Flanke 148 ist eine Vertiefung 150 oder Einbuchtung 152 der Dichtlippe 127 vorgesehen.

Somit ist insbesondere eine Vertiefung 150 zwischen den zwei die Dichtkante 128 bildenden Vorsprüngen 146 vorgesehen.

Eine weitere Vertiefung 150 ist vorzugsweise zwischen der in axialer Richtung 112 inneren Dichtkante 128i und dem Mittelabschnitt 140 des Grundkörpers 132 gebildet.

Wie Fig. 4 zu entnehmen ist, kann der Mittelabschnitt 140 des Grundkörpers 132 einen Führungsabschnitt 154 umfassen. Dieser Führungsabschnitt 154 weist vorzugsweise eine parallel zur Symmetrieachse 108 verlaufende Oberfläche auf und dient der Abstützung und/oder Führung des beweglichen Bauteils 106 im Falle einer Seitwärtsbewegung des beweglichen Bauteils 106 im Benutzungszustand des Dichtelements 100.

Ein Abstand des Führungsabschnitts 154 von der Symmetrieachse 108 ist dabei vorzugsweise größer als ein Radius R_{B} des beweglichen Bauteils 106.

Die äußere Dichtkante 128a der Dichtlippe 127 bildet eine primäre Dichtkante 128.

Die innere Dichtkante 128i der Dichtlippe 127 bildet eine sekundäre Dichtkante 128.

Wie Fig. 4 zu entnehmen ist, weisen die äußere Dichtkante 128a und die sich in axialer Richtung 112 nach innen gerichtet an diese äußere Dichtkante 128a anschließende Vertiefung 150 einen axialen Abstand Aₐₐ voneinander auf, welcher beispielsweise zumindest näherungsweise einem axialen Abstand Aₐᵢ zwischen der inneren Dichtkante 128i und der sich an diese innere Dichtkante 128i in axialer Richtung 112 nach innen gerichtet anschließenden Vertiefung 150 entspricht.

Vorzugsweise beträgt der Abstand Aₐₐ zwischen ungefähr 0,5 mm bis ungefähr 2,5 mm, beispielsweise zwischen ungefähr 0,5 mm bis ungefähr 1,5 mm, insbesondere zwischen ungefähr 0,6 mm bis ungefähr 1 mm.

Sowohl der Abstand Aₐₐ als auch der Abstand Aₐᵢ sind vorzugsweise bezogen auf die Entfernung der betreffenden Stellen der Dichtlippe 127 voneinander in axialer Richtung 112.

Durch geeignete Wahl der Abstände Aₐₐ und Aₐᵢ kann das Dichtelement 100 beispielsweise bei einer Herstellung desselben in einem Spritzgießverfahren möglichst beschädigungsfrei aus einer (nicht dargestellten) Formgebungsvorrichtung entformt werden. Insbesondere kann die Dichtlippe 127 beim Entformen im Bereich der äußeren Dichtkante 128a in radialer Richtung 114 nach außen gebogen werden, um auch eine möglichst zerstörungsfreie Entformung des die innere Dichtkante 128i bildenden Vorsprungs 146 zu ermöglichen.

Vorzugsweise werden bei der Entformung die äußere Dichtkante 128a und die innere Dichtkante 128i im Wesentlichen gleichmäßig in radialer Richtung 114 nach außen bewegt. Die hierdurch auf die Dichtlippe 127 wirkenden Kräfte können dann vorzugsweise gleichmäßig übertragen und aufgenommen werden.

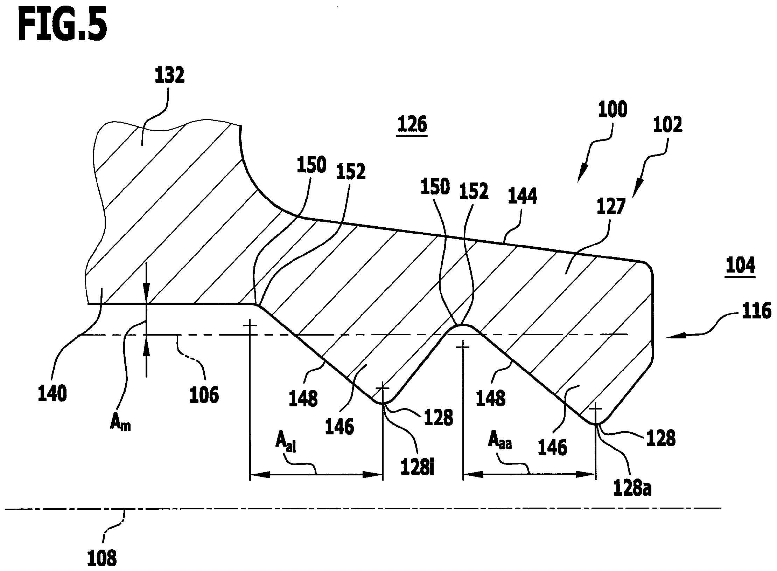

Eine in Fig. 5 dargestellte alternative Ausführungsform einer Dichtlippe 127 eines Dichtelements 100 unterscheidet sich von der in Fig. 4 dargestellten Ausführungsform im Wesentlichen dadurch, dass der Mittelabschnitt 140 keinen Führungsabschnitt 154 aufweist.

Ein Abstand Aₘ zwischen dem Mittelabschnitt 140 und dem beweglichen Bauteil 106 im montierten Zustand des Dichtelements 100 ist folglich größer als bei der in Fig. 4 dargestellten Ausführungsform des Dichtelements 100.

Im Übrigen stimmt die in Fig. 5 dargestellte Ausführungsform hinsichtlich Aufbau und Funktion mit der in Fig. 4 dargestellten Ausführungsform überein, so dass auf deren vorstehende Beschreibung insoweit Bezug genommen wird.

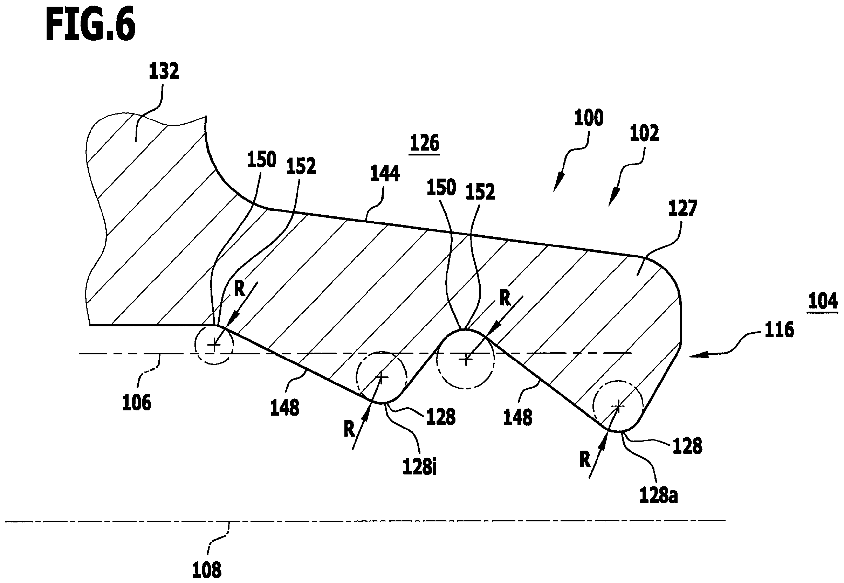

In Fig. 6 sind Radien R der Dichtkanten 128 sowie der Vertiefungen 150 dargestellt. Die Wahl der geeigneten Radien beeinflusst insbesondere eine Entformung des Dichtelements 100 nach einer Herstellung desselben in einem Spritzgießverfahren.

Vorzugsweise sind die Radien R der Dichtkanten 128 sowie der Vertiefungen 150 zumindest näherungsweise ähnlich groß gewählt.

Beispielsweise betragen die Radien zwischen ungefähr 0,1 mm und ungefähr 0,5 mm, insbesondere ungefähr 0,2 mm.

Es können jedoch auch voneinander verschiedene Radien R vorgesehen sein.

Beispielsweise können die Radien R der Dichtkanten 128 größer oder kleiner ausfallen als die Radien R der Vertiefungen 150.

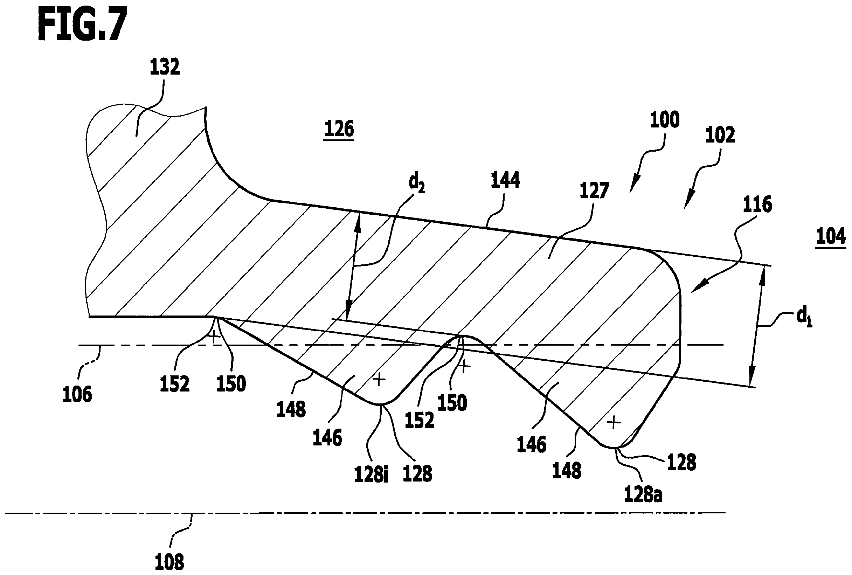

Wie insbesondere Fig. 7 zu entnehmen ist, ist die Dichtlippe 127 vorzugsweise so ausgebildet, dass eine Dichtlippendicke D₁ im Bereich der Vertiefung 150 oder Einbuchtung 152 zwischen dem Mittelabschnitt 140 und der Flanke 148 der inneren Dichtkante 128i größer ist als eine Dichtlippendicke D₂ zwischen den zwei Dichtkanten 128i, 128a im Bereich der dazwischen angeordneten Vertiefung 150 oder Einbuchtung 152.

Die Dichtlippendicke D₁, D₂ ist dabei jeweils ein minimaler Abstand zwischen der Oberseite 144 der Dichtlippe 127 und der jeweiligen Vertiefung 150 oder Einbuchtung 152.

Es kann vorgesehen sein, dass die Dichtlippendicke D₁ beispielsweise zwischen ungefähr 0,4 mm bis ungefähr 1 mm, insbesondere zwischen ungefähr 0,5 mm bis ungefähr 0,7 mm, vorzugsweise ungefähr 0,6 mm, beträgt.

Ferner kann vorgesehen sein, dass die Dichtlippendicke D₂ zwischen ungefähr 0,3 mm bis ungefähr 0,7 mm, insbesondere ungefähr 0,5 mm, beträgt.

Die Dichtlippe 127 ist dabei insbesondere so ausgebildet, dass eine optimale Abdichtung an dem beweglichen Bauteil 106 gewährleistet ist, wenn dieses bewegliche Bauteil 106 beispielsweise einen Radius R_{B} zwischen ungefähr 2 mm bis 9 mm, insbesondere ungefähr 2,5 mm bis ungefähr 6,5 mm, aufweist.

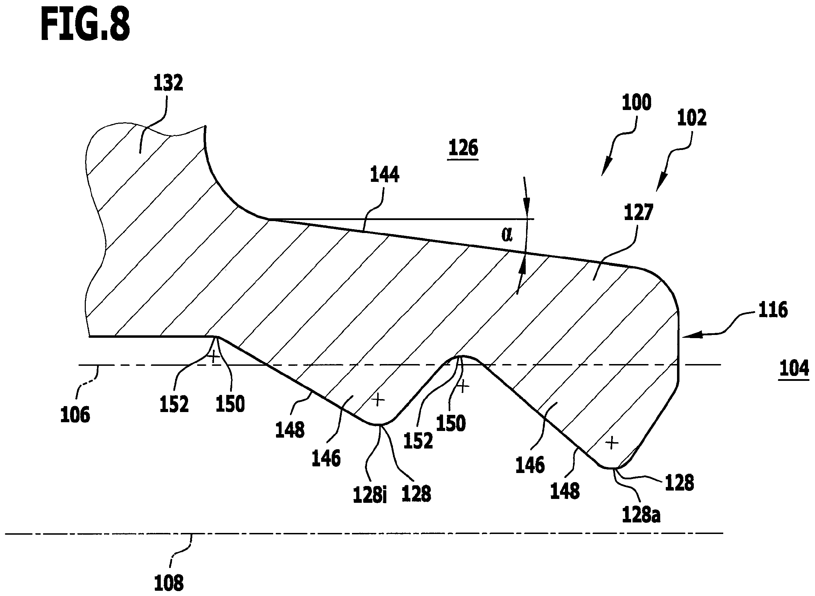

Wie insbesondere Fig. 8 zu entnehmen ist, ragt die Dichtlippe 127 schräg zur axialen Richtung 112 und schräg zur radialen Richtung 114 von dem Mittelabschnitt 140 des Grundkörpers 132 des Dichtelements 100 weg.

Ein Dichtlippenwinkel α, welcher einerseits von der Oberseite 144 der Dichtlippe 127 und andererseits von der Symmetrieachse 108 eingeschlossen wird, beträgt im fertiggestellten Zustand des Grundkörpers 132 vor der Montage eines Federelements 124 vorzugsweise zwischen ungefähr 3° und ungefähr 10°. In einem montagebereiten Zustand des Dichtelements 100, d.h. nach der Montage der Federelemente 124, kann der Dichtlippenwinkel α größer sein, beispielsweise um ungefähr 1° bis 3°.

Es kann vorgesehen sein, dass der Dichtlippenwinkel α bei der Herstellung des Grundkörpers 132 zunächst geringer gewählt wird. Beispielsweise kann bei der Herstellung des Grundkörpers 132 in einem Spritzgießverfahren zunächst ein Dichtlippenwinkel α von 0° vorgesehen sein. Die Oberseite 144 der Dichtlippe 127 verläuft dann im Wesentlichen parallel zur Symmetrieachse 108.

Um eine optimale Dichtwirkung des Dichtelements 100 zu gewährleisten, wird dann nach der Herstellung des Grundkörpers 132 im Spritzgießverfahren vorzugsweise eine Nachbearbeitung oder Nachbehandlung des Grundkörpers 132 durchgeführt.

Insbesondere kann dabei vorgesehen sein, dass die Dichtlippe 127 durch Kaltverformung oder Verformung nach oder während eines Erhitzen der Dichtlippe 127 und/oder des gesamten Grundkörpers 132 umgeformt wird, insbesondere um einen Dichtlippenwinkel α von mehr als ungefähr 3° zu erhalten.

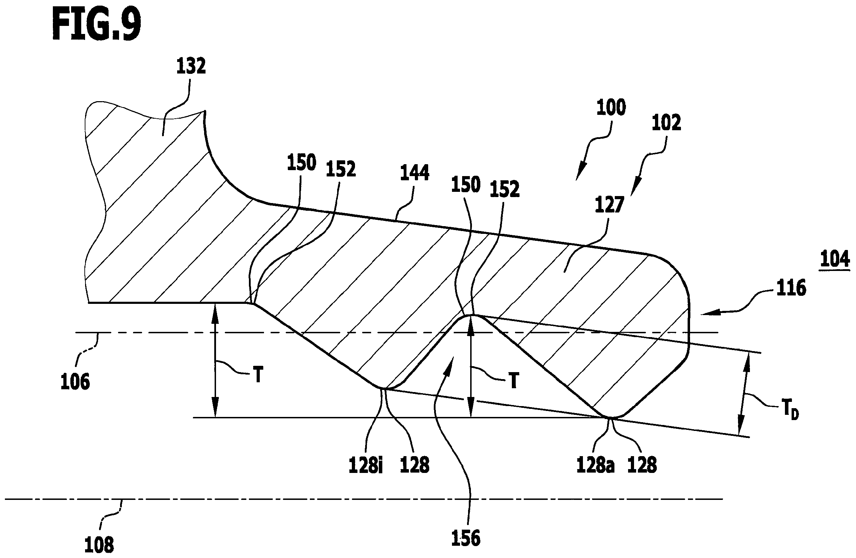

In Fig. 9 sind einerseits Hinterschnitttiefen T dargestellt, welche aufgrund der Geometrie der Dichtlippe 127 beim Entformen des Dichtelements 100 überwunden werden müssen. Eine Hinterschnitttiefe T zwischen den beiden Dichtkanten 128 ist dabei vorzugsweise geringer als eine Hinterschnitttiefe T im Bereich des Mittelabschnitts 140 des Grundkörpers 132 und/oder als im Bereich einer zwischen dem Mittelabschnitt 140 und der Flanke 148 der inneren Dichtkante 128i angeordneten Vertiefung 150 und/der Einbuchtung 152.

Aufgrund der Tatsache, dass die Hinterschnitttiefen T überwunden werden müssen, ist die Entformung des Dichtelements 100 aus einem Spritzgießwerkzeug insbesondere eine Zwangsentformung.

Wie Fig. 9 ferner zu entnehmen ist, weist die Dichtlippe 127 vorzugsweise ein Depot 156 zur Aufnahme eines Mediums, beispielsweise Kraftstoff oder Motoröl, auf. Mittels des Depots 156 kann insbesondere eine Leckage des Dichtelements im Bereich der Dichtlippe 127 zumindest temporär kompensiert werden, in dem das an der äußeren Dichtkante 128a vorbeigeführte Medium in dem Depot 156 aufgenommen wird. Durch geeignete Geometrie der Dichtkanten 128 und/oder der Flanken 148 kann insbesondere bei axialer Bewegung des beweglichen Bauteils 106 nach und nach eine Rückförderung des aufgenommenen Mediums in den angrenzenden Medienraum 104 erfolgen.

Eine Depottiefe T_{D} ist vorzugsweise ein minimaler Abstand zwischen der Vertiefung 150 zwischen den zwei Dichtkanten 128 und einer durch die beiden Dichtkanten 128 verlaufenden Gerade.

Vorzugsweise beträgt die Depottiefe T_{D} zwischen ungefähr 0,1 mm bis ungefähr 0,4 mm, insbesondere zwischen ungefähr 0,15 mm und ungefähr 0,25 mm.

Die hinsichtlich der Fig. 4 bis 9 beschriebenen Parameter einer Dichtlippe 127 treffen vorzugsweise auf eine Dichtlippe 127 eines dynamischen Dichtabschnitts 116 des Dichtelements 100 zu. Ferner kann vorgesehen sein, dass die beschriebenen Werte und Parameter für beide Dichtlippen 127 beider dynamischer Dichtabschnitte 116 zutreffen.

Insbesondere kann vorgesehen sein, dass das Dichtelement 100 bei sämtlichen beschriebenen Ausführungsformen spiegelsymmetrisch bezüglich der Quermittelebene 130 ausgebildet ist.

Ferner ist das Dichtelement 100 vorzugsweise bei jeder beschriebenen Ausführungsform rotationssymmetrisch um die Symmetrieachse 108 ausgebildet.

## Patentansprüche

1. Dichtelement (100) zum Abdichten zwischen einem mit einem ersten Medium gefüllten ersten Medienraum (104) und einem mit einem zweiten Medium gefüllten zweiten Medienraum (104) im Bereich eines beweglichen Bauteils (106), das längs einer Längsachse (110) des beweglichen Bauteils (106) verschiebbar und/oder längs der Längsachse (110) drehbar durch das Dichtelement (100) hindurchgeführt oder hindurchführbar ist,
wobei das Dichtelement (100) einen Grundkörper (132) umfasst, welcher zwei an dem beweglichen Bauteil (106) anliegende oder anlegbare dynamische Dichtabschnitte (116) aufweist,
wobei jeder dynamische Dichtabschnitt (116) eine Dichtlippe (127) aufweist, wobei jede Dichtlippe (127) jeweils eine, zwei oder mehr Dichtkanten (128) umfasst, wobei der Grundkörper (132) aus einem spritzgießbaren, teilfluorierten oder vollfluorierten thermoplastischen Kunststoffmaterial gebildet ist,
**dadurch gekennzeichnet,**
**dass** ein Fluorpolymeranteil des spritzgießbaren, teilfluorierten oder vollfluorierten thermoplastischen Kunststoffmaterials hinsichtlich seiner Masse und/oder seines Volumens mindestens ungefähr 85% beträgt und dass ein Kohlefaseranteil des spritzgießbaren, teilfluorierten oder vollfluorierten thermoplastischen Kunststoffmaterials hinsichtlich seiner Masse und/oder seines Volumens mindestens ungefähr 2% und höchstens ungefähr 6% beträgt.

2. Dichtelement (100) nach Anspruch 1, **dadurch gekennzeichnet, dass** das der Grundkörper (132) des Dichtelements (100) durch drehende und/oder spanende Bearbeitung zumindest einen Teil seiner endgültigen äußeren Form oder nur einen Teil seiner endgültigen äußeren Form oder seine vollständige endgültige äußere Form erhalten hat.

3. Dichtelement (100) nach einem der Ansprüche 1 oder 2, **dadurch gekennzeichnet, dass** eine im montierten Zustand des Dichtelements (100) dem beweglichen Bauteil (106) zugewandte Innenseite oder Unterseite (142) des Grundkörpers (132) nach einem Formgebungsschritt nachbearbeitet ist.

4. Dichtelement (100) nach einem der Ansprüche 1 bis 3, **dadurch gekennzeichnet, dass**
a) der Fluorpolymeranteil des thermoplastischen Kunststoffmaterials hinsichtlich seiner Masse und/oder seines Volumens mindestens ungefähr 90%, beispielsweise ungefähr 94%, beträgt; und/oder
b) der Fluorpolymeranteil des thermoplastischen Kunststoffmaterials hinsichtlich seiner Masse und/oder seines Volumens höchstens ungefähr 99%, vorzugsweise höchstens ungefähr 96%, beispielsweise ungefähr 94%, beträgt.

5. Dichtelement (100) nach einem der Ansprüche 1 bis 4, **dadurch gekennzeichnet, dass**
a) ein Kohlefaseranteil des thermoplastischen Kunststoffmaterials hinsichtlich seiner Masse und/oder seines Volumens mindestens ungefähr 4% beträgt; und/oder
b) ein Kohlefaseranteil des thermoplastischen Kunststoffmaterials hinsichtlich seiner Masse und/oder seines Volumens höchstens ungefähr 4% beträgt.

6. Dichtelement (100) nach einem der Ansprüche 1 bis 5, **dadurch gekennzeichnet, dass**
a) ein Graphitanteil des thermoplastischen Kunststoffmaterials hinsichtlich seiner Masse und/oder seines Volumens mindestens ungefähr 0,5%, vorzugsweise mindestens ungefähr 1,5%, beispielsweise ungefähr 2%, beträgt und/oder
b) ein Graphitanteil des thermoplastischen Kunststoffmaterials hinsichtlich seiner Masse und/oder seines Volumens höchstens ungefähr 6%, vorzugsweise höchstens ungefähr 4%, beispielsweise ungefähr 2%, beträgt.

7. Verwendung eines spritzgießbaren, teilfluorierten oder vollfluorierten Kunststoffmaterials zur Herstellung eines Dichtelements (100) nach einem der Ansprüche 1 bis 6.

8. Verfahren zur Herstellung eines Dichtelements (100) nach einem der Ansprüche 1 bis 6, umfassend:
Herstellen eines Grundkörpers (132) des Dichtelements (100) aus einem spritzgießbaren, teilfluorierten oder vollfluorierten thermoplastischen Kunststoffmaterial, wobei ein Fluorpolymeranteil des spritzgießbaren, teilfluorierten oder vollfluorierten thermoplastischen Kunststoffmaterials hinsichtlich seiner Masse und/oder seines Volumens mindestens ungefähr 85% beträgt und wobei ein Kohlefaseranteil des spritzgießbaren, teilfluorierten oder vollfluorierten thermoplastischen Kunststoffmaterials hinsichtlich seiner Masse und/oder seines Volumens mindestens ungefähr 2% und höchstens ungefähr 6% beträgt.

9. Verfahren nach Anspruch 8, **dadurch gekennzeichnet, dass** der Grundkörper (132) des Dichtelements (100) durch drehende und/oder spanende Bearbeitung zumindest einen Teil seiner endgültigen äußeren Form oder nur einen Teil seiner endgültigen äußeren Form oder seine vollständige endgültige äußere Form erhält.

10. Verfahren nach einem der Ansprüche 8 oder 9, **dadurch gekennzeichnet, dass** eine im montierten Zustand des Dichtelements (100) dem beweglichen Bauteil (106) zugewandte Innenseite oder Unterseite (142) des Grundkörpers (132) nach einem Formgebungsschritt nachbearbeitet wird.

11. Verfahren nach einem der Ansprüche 8 bis 10, **dadurch gekennzeichnet, dass** durch drehende und/oder spanende Bearbeitung eine oder mehrere Dichtkanten (128) und/oder Einbuchtungen (152) und/oder Vertiefungen (150) ausgebildet und/oder nachgearbeitet werden, wobei die drehende und/oder spanende Bearbeitung vorzugsweise unter Verwendung eines axial und radial verfahrbaren Werkzeugs erfolgt, welches gemäß einer zu erzeugenden Innenkontur des Grundkörpers (100) axial und radial an demselben entlanggeführt wird.

12. Verfahren nach Anspruch 11, **dadurch gekennzeichnet, dass** die drehende und/oder spanende Bearbeitung unter Verwendung eines Werkzeugs erfolgt, welches einen zu der zu erzeugenden Innenkontur des Grundkörpers (100) komplementären Bearbeitungsrand, insbesondere eine Bearbeitungsschneide, umfasst, wobei vorzugsweise das Werkzeug in radialer Richtung von innen nach außen an den Grundkörper (100) herangeführt wird, insbesondere derart, dass ohne axiale Bewegung in einem Bearbeitungsschritt die gewünschte Innenkontur des Grundkörpers (132) fertiggestellt wird.

13. Verfahren nach einem der Ansprüche 8 bis 12, **dadurch gekennzeichnet, dass** das thermoplastische Kunststoffmaterial als ein Compoundmaterial aus (nach Gewicht und/oder Volumen) ungefähr 94% Fluorpolymer, ungefähr 4% Kohlefaser und ungefähr 2% Graphit hergestellt wird.

14. Verfahren nach einem der Ansprüche 8 bis 13, **dadurch gekennzeichnet, dass** das thermoplastische Kunststoffmaterial in aufeinanderfolgenden Zonen einer Plastifiziereinheit einer Compoundieranlage nacheinander auf folgende Temperaturen gebracht wird: 80 ± 20 °C, 340 ± 20 °C, 360 ± 20, °C, 365 ± 20 °C, 350 ± 20 °C, 340 ± 20 °C.

15. Verfahren nach einem der Ansprüche 8 bis 14, **dadurch gekennzeichnet, dass** das thermoplastische Kunststoffmaterial in aufeinanderfolgenden Zonen einer Plastifiziereinheit einer Spritzgießvorrichtung zur Herstellung von Dichtelementen (100) nacheinander auf folgende Temperaturen gebracht wird: 350 ± 20 °C, 365 ± 20 °C, 370 ± 20, °C, 375 ± 20 °C, 380 ± 20 °C.

## Claims

1. Sealing element (100) for providing a seal between a first media space (104) filled with a first medium and a second media space (104) filled with a second medium in the region of a movable component (106), which is guided or is guidable through the sealing element (100) displaceably along a longitudinal axis (110) of the movable component (106) and/or rotatably along the longitudinal axis (110),
wherein the sealing element (100) comprises a main body (132), which has two dynamic sealing portions (116) which abut or are abuttable against the movable component (106),
wherein each dynamic sealing portion (116) has a sealing lip (127), wherein each sealing lip (127) comprises one, two or more sealing edges (128), wherein the main body (132) is formed from an injection-mouldable, partially fluorinated or fully fluorinated thermoplastic material,
**characterised in that**
a fluoropolymer content of the injection-mouldable, partially fluorinated or fully fluorinated thermoplastic material, in respect of its mass and/or its volume, is at least approximately 85%, and **in that** a carbon fibre content of the injection-mouldable, partially fluorinated or fully fluorinated thermoplastic material, in respect of its mass and/or its volume, is at least approximately 2% and at most approximately 6%.

2. Sealing element (100) according to claim 1, **characterised in that** the main body (132) of the sealing element (100) has obtained at least part of its final outer shape or only part of its final outer shape or its entire final outer shape by means of turning and/or machining.

3. Sealing element (100) according to either one of claims 1 or 2, **characterised in that** an inner side or underside (142) of the main body (132) facing towards the movable component (106) in the mounted state of the sealing element (100) is subjected to a finishing operation after a shaping step.

4. Sealing element (100) according to any one of claims 1 to 3, **characterised in that**
a) the fluoropolymer content of the thermoplastic material, in respect of its mass and/or its volume, is at least approximately 90%, for example approximately 94%; and/or
b) the fluoropolymer content of the thermoplastic material, in respect of its mass and/or its volume, is at most approximately 99%, preferably at most approximately 96%, for example approximately 94%

5. Sealing element (100) according to any one of claims 1 to 4, **characterised in that**
a) a carbon fibre content of the thermoplastic material, in respect of its mass and/or its volume, is at least approximately 4%; and/or
b) a carbon fibre content of the thermoplastic material, in respect of its mass and/or its volume, is at most approximately 4%.

6. Sealing element (100) according to any one of claims 1 to 5, **characterised in that**
a) a graphite content of the thermoplastic material, in respect of its mass and/or its volume, is at least approximately 0.5%, preferably at least approximately 1.5%, for example approximately 2%, and/or
b) a graphite content of the thermoplastic material, in respect of its mass and/or its volume, is at most approximately 6%, preferably at most approximately 4%, for example approximately 2%.

7. Use of an injection-mouldable, partially fluorinated or fully fluorinated plastics material for producing a sealing element (100) according to any one of claims 1 to 6.

8. Method for producing a sealing element (100) according to any one of claims 1 to 6, comprising:
producing a main body (132) of the sealing element (100) from an injection-mouldable, partially fluorinated or fully fluorinated thermoplastic material, wherein a fluoropolymer content of the injection-mouldable, partially fluorinated or fully fluorinated thermoplastic material, in respect of its mass and/or its volume, is at least approximately 85% and wherein a carbon fibre content of the injection-mouldable, partially fluorinated or fully fluorinated thermoplastic material, in respect of its mass and/or its volume, is at least approximately 2% and at most approximately 6%.

9. Method according to claim 8, **characterised in that** the main body (132) of the sealing element (100) obtains at least part of its final outer shape or only part of its final outer shape or its entire final outer shape by means of turning and/or machining.

10. Method according to either one of claims 8 or 9, **characterised in that** an inner side or underside (142) of the main body (132) facing towards the movable component (106) in the mounted state of the sealing element (100) is subjected to a finishing operation after a shaping step.

11. Method according to any one of claims 8 to 10, **characterised in that** one or more sealing edges (128) and/or indentations (152) and/or recesses (150) are formed and/or subjected to a finishing operation by means of turning and/or machining, wherein the turning and/or machining is preferably performed with use of an axially and radially movable tool, which is guided axially and radially along the main body (100) in accordance with an inner contour of said main body to be produced.

12. Method according to claim 11, **characterised in that** the turning and/or machining is performed with use of a tool which comprises a processing edge, in particular a processing blade, complementary to the inner contour of the main body (100) to be produced, wherein preferably the tool is guided against the main body (100) from the inside out in a radial direction, in particular in such a way that the desired inner contour of the main body (132) is completed in a processing step without axial movement.

13. Method according to any one of claims 8 to 12, **characterised in that** the thermoplastic material is produced as a compound material from (according to weight and/or volume) approximately 94% fluoropolymer, approximately 4% carbon fibre, and approximately 2% graphite.

14. Method according to any one of claims 8 to 13, **characterised in that** the thermoplastic material is brought in succession, in successive zones of a plasticising unit of a compounding facility, to the following temperatures: 80 ± 20°C, 340 ± 20°C, 360 ± 20°C, 365 ± 20°C, 350 ± 20°C, 340 ± 20°C.

15. Method according to any one of claims 8 to 14, **characterised in that** the thermoplastic material is brought in succession, in successive zones of a plasticising unit of an injection moulding apparatus for producing sealing elements (100), to the following temperatures: 350 ± 20°C, 365 ± 20°C, 370 ± 20°C, 375 ± 20°C, 380 ± 20°C.

## Revendications

1. Élément d'étanchéité (100) servant à l'étanchéification entre un premier espace de milieu (104) rempli d'un premier milieu et un deuxième espace de milieu (104) rempli d'un deuxième milieu dans la zone d'un composant (106) mobile, qui est guidé ou peut être guidé à travers l'élément d'étanchéité (100) de manière à pouvoir coulisser le long d'un axe longitudinal (110) du composant (106) mobile et/ou de manière à pouvoir tourner le long de l'axe longitudinal (110),
dans lequel l'élément d'étanchéité (100) comprend un corps de base (132), lequel présente deux sections d'étanchéité (116) dynamiques placées ou pouvant être placées au niveau du composant (106) mobile,
dans lequel chaque section d'étanchéité (116) dynamique présente une lèvre d'étanchéité (127), dans lequel chaque lèvre d'étanchéité (127) comprend respectivement une, deux arêtes d'étanchéité (128) ou plus, dans lequel le corps de base (132) est formé à partir d'un matériau synthétique thermoplastique fluoré en partie ou fluoré en totalité, pouvant être moulé par injection,
**caractérisé en ce**
**qu'**une fraction de fluoropolymère du matériau synthétique thermoplastique fluoré en partie ou fluoré en totalité, pouvant être moulé par injection est d'au moins 85 % approximativement quant à sa masse et/ou son volume, et qu'une fraction de fibres de carbone du matériau synthétique thermoplastique fluoré en partie ou fluoré en totalité, pouvant être moulé par injection est d'au moins 2 % approximativement et au maximum de 6 % approximativement quant à sa masse et/ou son volume.

2. Élément d'étanchéité (100) selon la revendication 1, **caractérisé en ce que** le corps de base (132) de l'élément d'étanchéité (100) a obtenu au moins une partie de sa forme extérieure définitive ou seulement une partie de sa forme extérieure définitive ou la totalité de sa forme extérieure définitive par un usinage par rotation et/ou par enlèvement de copeaux.

3. Élément d'étanchéité (100) selon l'une quelconque des revendications 1 ou 2, **caractérisé en ce qu'**un côté intérieur ou coté inférieur (142), tourné dans l'état monté de l'élément d'étanchéité (100) vers le composant (106) mobile, est usiné ultérieurement après une étape de façonnage.

4. Élément d'étanchéité (100) selon l'une quelconque des revendications 1 à 3, **caractérisé en ce que**
a) la fraction de fluoropolymère du matériau synthétique thermoplastique est d'au moins 90 % approximativement, par exemple de 94 % approximativement quant à sa masse et/ou son volume ; et/ou
b) la fraction de fluoropolymère du matériau synthétique thermoplastique est au maximum de 99 % approximativement, de préférence au maximum de 96 % approximativement, par exemple de 94 % approximativement quant à sa masse et/ou son volume.

5. Élément d'étanchéité (100) selon l'une quelconque des revendications 1 à 4, **caractérisé en ce que**
a) une fraction de fibres de carbone du matériau synthétique thermoplastique est d'au moins 4 % approximativement quant à sa masse et/ou son volume ; et/ou
b) une fraction de fibres de carbone du matériau synthétique thermoplastique est au maximum de 4 % approximativement quant à sa masse et/ou son volume.

6. Élément d'étanchéité (100) selon l'une quelconque des revendications 1 à 5, **caractérisé en ce que**
a) une fraction de graphite du matériau synthétique thermoplastique est d'au moins 0,5 % approximativement, de préférence d'au moins 1,5 % approximativement, par exemple de 2 % approximativement, quant à sa masse et/ou son volume et/ou
b) une fraction de graphite du matériau synthétique thermoplastique est au maximum de 6 % approximativement, de préférence au maximum de 4 % approximativement, par exemple de 2 % approximativement, quant à sa masse et/ou son volume.

7. Utilisation d'un matériau synthétique fluoré en partie ou fluoré en totalité, pouvant être moulé par injection pour fabriquer un élément d'étanchéité (100) selon l'une quelconque des revendications 1 à 6.

8. Procédé de fabrication d'un élément d'étanchéité (100) selon l'une quelconque des revendications 1 à 6, comprenant :
la fabrication d'un corps de base (132) de l'élément d'étanchéité (100) à partir d'un matériau synthétique thermoplastique fluoré en partie ou fluoré en totalité, pouvant être moulé par injection, dans lequel une fraction de fluoropolymère du matériau synthétique thermoplastique fluoré en partie ou fluoré en totalité, pouvant être moulé par injection est d'au moins 85 % approximativement quant à sa masse et/ou son volume et dans lequel une fraction de fibres de carbone du matériau synthétique thermoplastique fluoré en partie ou fluoré en totalité, pouvant être moulé par injection est d'au moins 2 % approximativement et au maximum de 6 % approximativement quant à sa masse et/ou son volume.

9. Procédé selon la revendication 8, **caractérisé en ce que** le corps de base (132) de l'élément d'étanchéité (100) obtient au moins une partie de sa forme extérieure définitive ou seulement une partie de sa forme extérieure définitive ou la totalité de sa forme extérieure définitive par usinage par rotation et/ou par enlèvement de copeaux.

10. Procédé selon l'une quelconque des revendications 8 ou 9, **caractérisé en ce qu'**un côté intérieur ou côté inférieur (142), tourné dans l'état monté de l'élément d'étanchéité (100) vers le composant (106) mobile, du corps de base (132) est usiné ultérieurement après une étape de façonnage.

11. Procédé selon l'une quelconque des revendications 8 à 10, **caractérisé en ce qu'**une ou plusieurs arêtes d'étanchéité (128) et/ou échancrures (152) et/ou renfoncements (150) sont réalisés et/ou pratiqués ultérieurement par usinage par rotation et/ou par enlèvement de copeaux, dans lequel l'usinage par rotation et/ou par enlèvement de copeaux est effectué de préférence en utilisant un outil pouvant être déplacé axialement et radialement, lequel est guidé axialement et radialement le long du corps de base (100) selon un contour intérieur à générer de celui-ci.

12. Procédé selon la revendication 11, **caractérisé en ce que** l'usinage par rotation et/ou par enlèvement de copeaux est effectué en utilisant un outil, lequel comprend un bord d'usinage, en particulier un tranchant d'usinage, complémentaire par rapport au contour intérieur à générer du corps de base (100), dans lequel de préférence l'outil est guidé de manière à se rapprocher du corps de base (100) dans une direction radiale de l'intérieur vers l'extérieur, en particulier de telle manière que le contour intérieur souhaité du corps de base (132) est finalisé lors d'une étape d'usinage sans déplacement axial.

13. Procédé selon l'une quelconque des revendications 8 à 12, **caractérisé en ce que** le matériau synthétique thermoplastique est fabriqué en tant qu'un matériau composite à partir (selon le poids et/ou le volume) d'approximativement 94 % de fluoropolymère, d'approximativement 4 % de fibre de carbone et d'approximativement 2 % de graphite.

14. Procédé selon l'une quelconque des revendications 8 à 13, **caractérisé en ce que** le matériau synthétique thermoplastique est amené, dans des zones se suivant les unes les autres d'une unité de plastification d'une installation de préparation de mélanges, successivement à des températures suivantes : 80 ± 20 °C, 340 ± 20 °C, 360 ± 20 °, 365 ± 20 °C, 350 ± 20 °C, 340 ± 20 °C.

15. Procédé selon l'une quelconque des revendications 8 à 14, **caractérisé en ce que** le matériau synthétique thermoplastique est amené dans des zones se suivant les unes les autres d'une unité de plastification d'un dispositif de moulage par injection servant à fabriquer des éléments d'étanchéité (100) successivement à des températures suivantes : 350 ± 20 °C, 365 ± 20 °C, 370 ± 20 °C, 375 ± 20 °C, 380 ± 20 °C.
